# EUROPEAN PATENT APPLICATION

(11) **EP 4 567 201 A1**
(43) Date of publication of application: **11.06.2025**
(21) Application number: 23871688.0
(22) Date of filing: 30.08.2023
(51) Int. Cl.: E02F 9/20, E02F 9/24, E02F 9/26

(54) **VIDEO-RECORDING SYSTEM**

(30) Priority: 30.09.2022 JP 2022159122
(71) Applicant: Hitachi Construction Machinery Co., Ltd., Tokyo 110-0015 (JP)
(72) Inventor: TAGO, Hisashi, Tsuchiura-shi, Ibaraki 300-0013 (JP); TANAKA, Masamichi, Tsuchiura-shi, Ibaraki 300-0013 (JP); HIGURASHI, Masaki, Tsuchiura-shi, Ibaraki 300-0013 (JP); SATO, Kiichi, Tsuchiura-shi, Ibaraki 300-0013 (JP); SAKAI, Daito, Tsuchiura-shi, Ibaraki 300-0013 (JP); SAITO, Risa, Tsuchiura-shi, Ibaraki 300-0013 (JP)
(74) Representative: Manitz Finsterwald Patent- und Rechtsanwaltspartnerschaft mbB
(86) International application number: PCT/JP2023/031489
(87) International publication number: WO 2024/070448

(57) **Abstract**

The present invention provides a camera for capturing the surroundings of construction machinery and one or more types of sensors for detecting the state of the construction machinery. Based on the output of the sensors or the surrounding images captured by the camera, it detects sign of the construction machinery tipping over or parts of the construction machinery coming into contact with surrounding objects. Upon detecting such signs, it triggers the recording of the surrounding images captured by the camera.

## Description

### Technical Field

The present invention relates to a video recording system, which is suitable for application in recording the surrounding images of construction machinery, for example.

### Background Art

In recent years, there has been an increase in drivers installing drive recorders in automobiles for the purpose of investigating the causes of accidents. Here, a drive recorder refers to a video recording device that captures images of the front of the vehicle, etc., while driving or stationary, using a camera mounted on the vehicle body, and records the images obtained.

Recently, these drive recorders not only capture images of the front of the vehicle but also link vehicle body data such as CAN (Controller Area Network) signals with the video data and store them in the video recording device. By storing not only video but also vehicle body data, it becomes possible to verify more detailed situations at the time of an accident based on these video and vehicle body data.

Such video recording devices are considered effective not only for private automobiles but also for construction machinery. By equipping construction machinery with a video recording device and recording the surrounding images of the operating construction machinery, it is considered possible to verify near-miss accident (e.g., cause investigation) based on these surrounding images. Here, a 'near-miss accident' refers to an incident that did not result in a serious accident but was a step away from directly leading to an accident.

It should be noted that Patent Document 1 below discloses a drive recorder that determines the scale of an accident based on the acceleration detected in the X-Y-Z directions by a collision sensor and variably sets the data amount of the file to be saved according to the determined scale of the accident.

### Prior Art Documents

### Patent Documents

Patent Document 1: Japanese Patent No. 4394780

### Summary of the Invention

### Problems to be Solved by the Invention

However, when installing a video recording device on construction machinery, recording all the video data and vehicle body data for the entire operating time of the construction machinery can overwhelm the storage capacity of the video recording device, leading to issues such as overwriting necessary data or increasing the workload of extracting data during near-miss accident.

Therefore, when installing a video recording device on construction machinery, it is desirable to trigger the start of recording at the necessary timing to prevent the recording of unnecessary video data unrelated to near-miss accident and to facilitate the extraction of near-miss incident data.

In this regard, Patent Document 1 discloses saving recorded video using the impact detected by the vehicle's acceleration sensor as a trigger. However, construction machinery is constantly subjected to impacts and large vibrations due to operations, so it is not uncommon for impacts equivalent to accidents to occur even during normal operation. Therefore, it is not appropriate to use the same trigger for starting recording in construction machinery as in automobiles.

The present invention has been made in consideration of the above points and proposes a video recording system that facilitates the extraction of surrounding images during the occurrence of events such as near-miss accident, thereby simplifying the verification work for such incidents.

### Means for Solving the Problems

To solve the above problems, the present invention provides a video recording system for recording the surroundings of construction machinery includes a video recording system including a camera that captures the surroundings of the construction machinery, one or more types of sensors that detect the state of the construction machinery, a controller that detects a sign of the construction machinery tipping over or a part of the construction machinery coming into contact with surrounding objects, based on the output of the sensor or the surrounding images of the construction machinery captured by the camera, a video recording device that records the surrounding images of the construction machinery captured by the camera, triggered by the controller detecting the sign.

The video recording system of the present invention can limit the recording timing of the surrounding images of construction machinery when an operation is performed that may cause the construction machinery to tip over or a part of the construction machinery to contact surrounding objects, i.e., when a near-miss accident occurs.

### Advantages of the Invention

According to the present invention, a video recording system can be realized that facilitates the extraction of surrounding images during the occurrence of events such as near-miss accident and simplifies the verification work for such incidents.

### Brief Description of the Drawings

[FIG. 1] FIG. 1 is a side view showing the construction of a construction machine equipped with an operation information recording system according to the present embodiment.
[FIG. 2] FIG. 2 is a block diagram showing the configuration of the operation information recording system according to the present embodiment.
[FIG. 3] FIG. 3(A) is a diagram showing the state of the gate lock device, FIG. 3(B) is a diagram showing the recording trigger signal, and FIG. 3(C) is a diagram for explaining the timing of the on/off of the recording function.
[FIG. 4] FIG. 4 is a flowchart showing the processing procedure of the recording process.
[FIG. 5] FIG. 5 is a flowchart showing the processing procedure of the recording trigger signal generation process.
[FIG. 6] FIG. 6(A) and FIG. 6(B) are a top view and a side view, respectively, for explaining the operation restriction area of the construction machinery.
[FIG. 7] FIG. 7 is a diagram showing an example of the screen configuration of the sign detection case list screen.
[FIG. 8] FIG. 8 is a diagram showing an example of the screen configuration of the case detail screen.

### Modes for Carrying Out the Invention

An embodiment of the present invention will be described in detail below with reference to the drawings.

### (1) Configuration of the operation information recording system according to the present embodiment and the construction machinery equipped with it

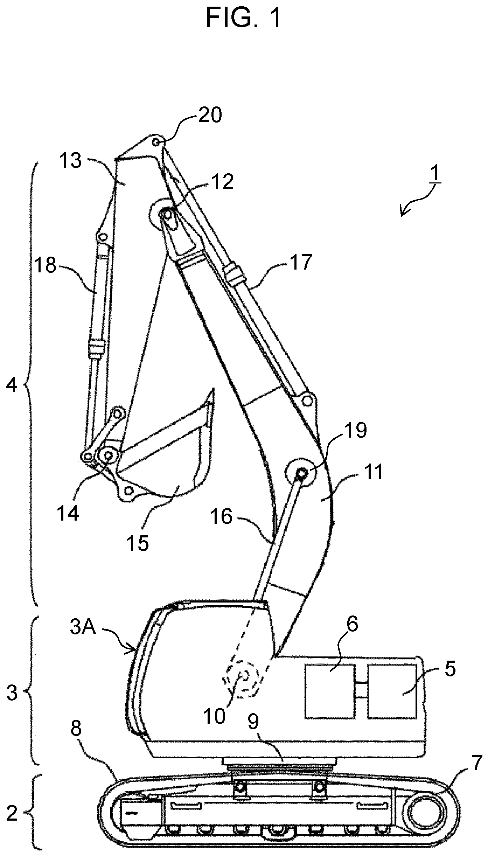

In FIG. 1, 1 indicates a construction machine (hydraulic excavator) equipped with the operation information recording system according to the present embodiment as a whole. This construction machine 1 is configured with a self-propelled lower travel body 2, an upper swing body 3 mounted rotatably on the lower travel body 2, and a front device 4 connected to the front of the upper swing body 3.

The upper swing body 3 is equipped with an engine 5 as a power source and a main pump 6 driven by the engine 5. The hydraulic oil delivered by the main pump 6 allows the lower travel body 2, the upper swing body 3, and the front device 4 to operate independently.

In fact, the lower travel body 2 is equipped with a pair of travel hydraulic motors 7 driven by the hydraulic oil delivered from the main pump 6, mounted on the left and right rear sides. By driving these travel hydraulic motors 7, the crawlers 8 provided on both sides in the left-right direction of the lower travel body 2 can be independently driven to rotate. This allows the entire construction machine 1 with the lower travel body 2 to travel in the front-rear direction or to swing in the left-right direction.

The upper swing body 3 is connected to the lower travel body 2 via a swing hydraulic motor 9 that operates with the hydraulic oil delivered from the main pump 6. By driving this swing hydraulic motor 9, the upper swing body 3 can be swung in the left-right direction relative to the lower travel body 2.

The front device 4 is a working device that directly performs operations such as excavation or leveling of the ground, or lifting excavated soil and other loads. The front device 4 includes a boom 11 connected to the upper swing body 3 so that one end side can rotate in the front-rear direction of the upper swing body 3 via the rotating shaft 10,and an arm 13 with one end rotatably connected to the other end of the boom 11 via a rotating shaft 12, and a bucket 15 rotatably connected to the other end of the arm 13 via a rotating shaft 14. Furthermore, the device 4 is configured with a boom cylinder 16, an arm cylinder 17, and a bucket cylinder 18, which can be extended and retracted by the hydraulic oil delivered from the main pump 6.

In this case, the boom cylinder 16 is connected to the boom 11 via a rotating shaft 19 at one end and to the upper swing body 3 via an unillustrated rotating shaft at the other end. This allows the boom cylinder 16 to be driven to extend and retract, and the boom 11 to be rotated around the rotating shaft 10.

The arm cylinder 17 is connected to the boom 11 at one end and to the arm 13 at the other end via a rotating shaft 20. This allows the arm cylinder 17 to be driven to extend and retract, and the arm 13 to be rotated around the rotating shaft 12.

Furthermore, the bucket cylinder 18 is connected to the arm 13 at one end and to the bucket 15 at the other end via a link. This allows the bucket cylinder 18 to be driven to extend and retract, and the bucket 15 to be rotated around the rotating shaft 14.

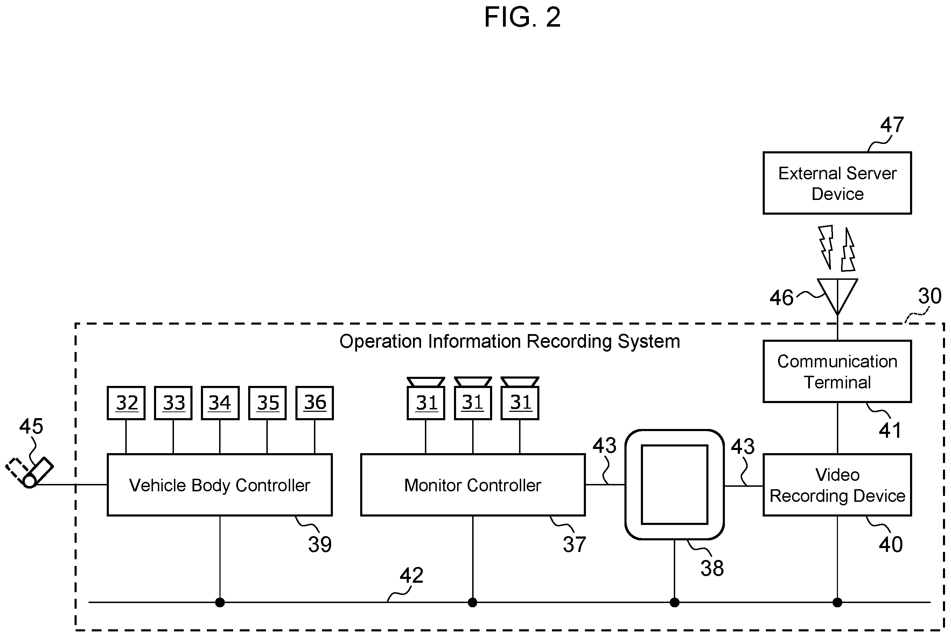

Additionally, these travel hydraulic motors 7, swing hydraulic motor 9, boom cylinder 16, arm cylinder 17, and bucket cylinder 18 are switched between an allowed state and a prohibited state by a gate lock device 45 (see FIG. 2) provided in the operator's cab of the upper swing body 3.

FIG. 2 shows the configuration of the operation information recording system 30 of the present embodiment mounted on the construction machine 1. This operation information recording system 30 is a system for recording video data of the surrounding images and vehicle body data of the construction machine 1 during its operation when a near-miss accident is detected. In the following, as a 'near-miss accident,' the operation information recording system 30 detects a sign that the posture of the construction machine 1 changes and tipping over, or the sign that the front device 4 contacts surrounding objects, as an example.

The operation information recording system 30 is mounted on the construction machinery 1 and is configured with various sensors such as multiple surrounding monitoring cameras 31, an inclination sensor 32, a swing angle sensor 33, a boom angle sensor 34, an arm angle sensor 35, and a load sensor 36, as well as a monitor controller 37, a monitor 38, a vehicle body controller 39, a video recording device 40, and a communication terminal 41, each arranged in the operator's seat 3A of the upper swing body 3 (Fig. 1). Additionally, the monitor controller 37, monitor 38, vehicle body controller 39, and video recording device 40 are communicatively connected via an in-vehicle network 42 such as a CAN network.

The surrounding monitoring cameras 31 are cameras for capturing the surroundings of the construction machinery 1, and are arranged in multiple locations on the upper part of the upper swing body 3 to capture the left and right sides, front, and rear. Each surrounding monitoring camera 31 outputs the video data of the surrounding images of the construction machinery 1 obtained by capturing to the monitor controller 37.

The inclination sensor 32 and the swing angle sensor 33 are each arranged on the upper swing body 3. The inclination sensor 32 detects the tilt angles in the front-rear and left-right directions of the upper swing body 3 (i.e., the pitch and roll angles of the upper swing body 3 with the front direction as the roll axis direction) and outputs these detected tilt angles to the vehicle body controller 39. The swing angle sensor 33 detects the swing angle of the upper swing body 3 relative to the lower travel body 2 and outputs the detected swing angle to the vehicle body controller 39.

The boom angle sensor 34, arm angle sensor 35, and load sensor 36 are each arranged on the front device 4. The boom angle sensor 34 detects the posture of the boom 11 as the tilt angle from the reference state (hereinafter referred to as the boom tilt angle) and outputs the detected boom tilt angle to the vehicle body controller 39.

The arm angle sensor 35 detects the posture of the arm 13 as the tilt angle from the reference state relative to the boom 11 (hereinafter referred to as the arm tilt angle) and outputs the detected arm tilt angle to the vehicle body controller 39. Furthermore, the load sensor 36 detects the load of the suspended load lifted by the front device 4 and outputs the detected load to the vehicle body controller 39.

The monitor controller 37 generates composite images such as split images where the surrounding images captured by each surrounding monitoring camera 31 are displayed in segments, or surround view images where the boundaries of the surrounding images captured by adjacent surrounding monitoring cameras 31 are blended, based on the video data provided by each surrounding monitoring camera 31. The monitor controller 37 then transmits the video data of the generated composite images to the monitor 38 and the video recording device 40 via the communication line 43.

The monitor 38 is composed of a display device such as an LCD panel or an organic EL (Electro-Luminescence) panel. The monitor 38 displays the composite images based on the video data provided by the monitor controller 37 via the communication line 43.

The vehicle body controller 39 transmits the sensor data provided by the inclination sensor 32, swing angle sensor 33, boom angle sensor 34, arm angle sensor 35, and load sensor 36 to the video recording device 40 via the in-vehicle network 42. Additionally, the vehicle body controller 39 monitors these sensor data and, when the lock of the gate lock device 45 provided in the operator's seat 3A is released, if it detects a sign that the construction machinery 1 is tipping over or the front device 4 is contacting surrounding objects, it sends a recording trigger signal to the video recording device 40 via the in-vehicle network 42 to initiate recording. Details of the 'sign of the construction machinery 1's posture changing leading to tipping over, or the front device 4 contacting surrounding objects' will be described later.

Although not shown, the vehicle body controller 39 is also provided with sensor data representing the pressure of the hydraulic oil supplied to the travel hydraulic motor 7, swing hydraulic motor 9, boom cylinder 16, arm cylinder 17, and bucket cylinder 18, detected by hydraulic sensors attached to these components as described in Fig. 1. The vehicle body controller 39 also transmits the sensor data provided by these hydraulic sensors to the video recording device 40 via the in-vehicle network 42.

The video recording device 40 is configured with storage devices such as semiconductor memory like flash memory, or hard disk drives or SSDs (Solid State Drives). The video recording device 40 is provided with the video data of the composite images from the monitor controller 37 and the sensor data from various sensors from the vehicle body controller 39 as described above. In addition, the video recording device 40 is sequentially provided with engine speed data representing the rotation speed of the engine 5 (Fig. 1) from an ECU (Electronic Control Unit) not shown.

The video recording device 40 temporarily and sequentially stores the video data of the composite images provided by the monitor controller 37 for a certain recent period, and also temporarily and sequentially stores the sensor data from various sensors provided by the vehicle body controller 39 and the engine speed data provided by the ECU as vehicle body data, linking them with the composite images generated at the same time for the same recent period.

Additionally, when a recording trigger signal is provided by the vehicle body controller 39, the video recording device 40 files and saves the most recent predetermined period (e.g., 30 seconds) of the temporarily stored video data and vehicle body data. Subsequently, the video recording device 40 files and saves the predetermined period (e.g., 30 seconds) of video data and vehicle body data provided by the monitor controller 37, vehicle body controller 39, and ECU as sign detection data. Hereinafter, the operation of filing and saving the sign detection data for a predetermined period will be referred to as recording.

At this time, the video recording device 40 also stores and saves the current position of the construction machinery 1 at the time notified by the communication terminal 41 in the sign detection data file, as described later. Then, the video recording device 40 uploads (transmits) the saved sign detection data file to the external server device 47 via wireless communication through the communication terminal 41 and the antenna 46 provided on the upper swing body 3 at an appropriate timing.

The communication terminal 41 is a communication device capable of bidirectional communication with the external server device 47 via a wireless communication line such as a mobile phone line. This allows the operation information recording system 30 not only to upload the aforementioned files to the external server device 47 but also enables the external server device 47 to access the operation information recording system 30.

This communication terminal is equipped with a GPS (Global Positioning System) receiver. The communication terminal sequentially detects its current position based on the GPS signals received by this GPS receiver and notifies the detected current position to the video recording device 40. Thus, this current position is stored in the sign detection data file as described above and uploaded to the external server device 47.

The external server device 47 is composed of a general-purpose server device equipped with a CPU (Central Processing Unit), a main storage device such as semiconductor memory, an auxiliary storage device such as a hard disk drive, input devices such as a mouse and keyboard, and display devices such as an LCD display or an organic EL display, and is provided separately from the construction machinery 1.

The external server device 47 accumulates and manages the sign detection data files appropriately transmitted from one or more construction machinery 1 under its management. The external server device 47 also displays the composite images and other necessary information based on the accumulated sign detection data, according to the user's predetermined operations, when the vehicle body controller 39 of each construction machinery 1 detects sign of posture change leading to tipping over or the front device 4 contacting surrounding objects.

In this embodiment, a single video recording system is constructed by the external server device 47 and the operation information recording system 30 of one or more construction machinery 1 under the management of the external server device 47. The user of this video recording system can use the sign detection data accumulated in the external server device 47 to more thoroughly verify the operator's actions that led to the detection of sign of posture change leading to tipping over or the front device 4 contacting surrounding objects, using statistical methods and the like. Additionally, the user of the video recording system can use the verification results for future training of the operator of the construction machinery 1.

### (2) Relationship between Recording Trigger Signal and Sign Detection Data

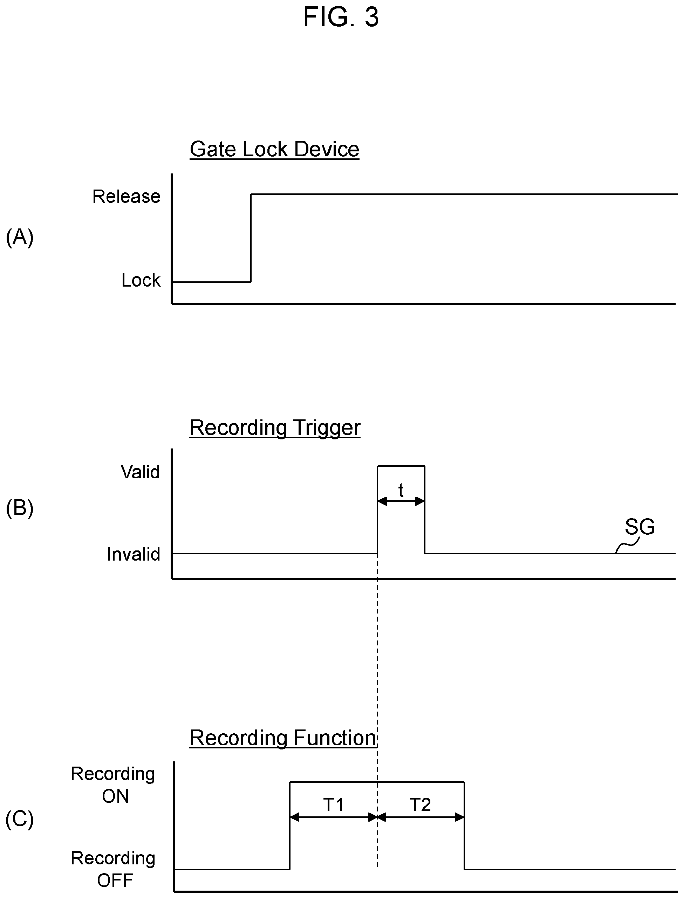

FIG 3 shows the state of the gate lock device 45 and the recording timing of the sign detection data. The vehicle body controller 39, as shown in FIG. 3(A), sends a recording trigger signal SG, which is valid for a predetermined time t, to the video recording device 40 when the lock of the gate lock device 45 is released and operation is permitted, and when a sign of tipping of the construction machinery 1 or contact of the front device 4 with surrounding objects is detected, as shown in FIG. 3(B).

Then, the video recording device 40 starts recording when the recording trigger signal SG becomes valid, and records the video data and vehicle body data for a predetermined time T1 before the point when the recording trigger signal SG became valid, and the video data and vehicle body data for a predetermined time T2 after that point as sign detection data, as shown in FIG. 3(C). The value of the predetermined time T2 is set to be greater than the predetermined time t.

The video recording device 40 continues the recording for one session ((T1+T2) time of recording) until it is completed, even if the recording trigger signal SG switches from invalid to valid again, ignoring this and continuing the recording for that one session.

### (3) Processing of the video recording device and vehicle body controller related to recording

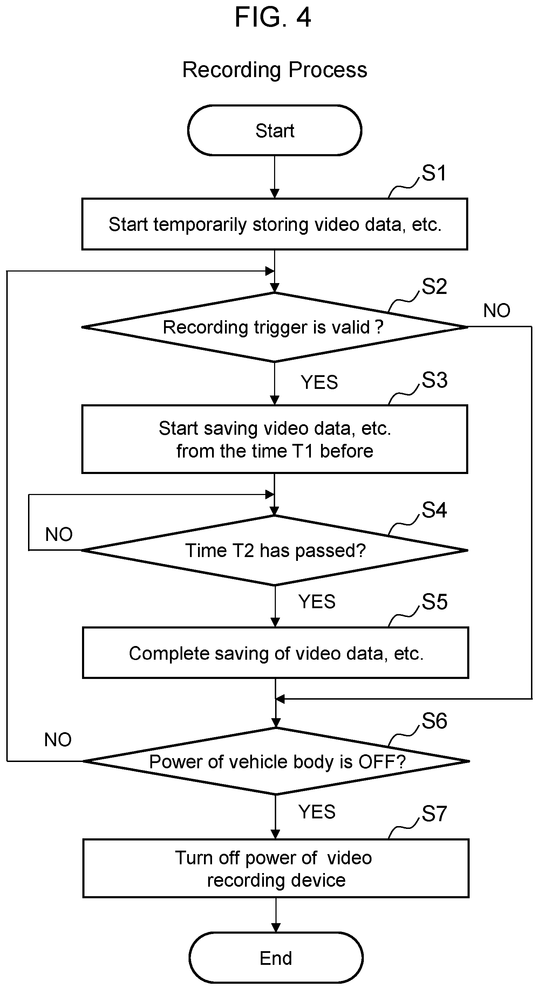

FIG. 4 shows the flow of a series of processes (hereinafter referred to as recording processing) executed by the video recording device 40 in relation to the recording of surrounding images of the construction machinery 1 as described above. This recording process starts when the engine of the construction machinery 1 is started, the power of the vehicle body is turned on, and the power of the entire operation information recording system 30 (FIG. 2) is turned on, and the preparation for recording is completed in the video recording device 40.

Then, the video recording device 40 first starts temporarily storing the video data provided by the monitor controller 37, etc., and the vehicle body data provided by the vehicle body controller 39 and ECU, etc. (S1), and then determines whether the recording trigger signal provided by the vehicle body controller 39 is valid (S2).

If the video recording device 40 obtains a negative result in this determination, it determines whether the power of the vehicle body has been turned off (S6). Also, if the video recording device 40 obtains a negative result in this determination, it returns to step S2 and repeats the loop of step S2-step S6-step S2 until the recording trigger signal becomes valid or the power of the vehicle body is turned off.

Then, when the recording trigger signal eventually becomes valid, the video recording device 40 starts saving the video data and vehicle body data temporarily stored from the time T1 before the point when the recording trigger signal became valid (S3).

Subsequently, the video recording device 40 waits for time T2 to elapse from the point when the recording trigger signal became valid (S4). Then, when time T2 has elapsed from the point when the recording trigger signal became valid, the video recording device 40 completes the saving of the video data and vehicle body data. After that, the video recording device 40 files the (T1+T2) time of video data and vehicle body data saved up to that point, along with the position data of the current position of the vehicle body notified by the communication terminal 41 at that time, as sign detection data (S5).

Next, the video recording device 40 determines whether the power of the vehicle body has been turned off (S6). Then, if the video recording device 40 obtains a negative result in this determination, it returns to step S2 and repeats the processing from step S2 onward in the same manner as described above.

Also, when the power of the vehicle body is eventually turned off, the video recording device 40 obtains a positive result in step S6 and turns off its own power (S7). This ends the recording process.

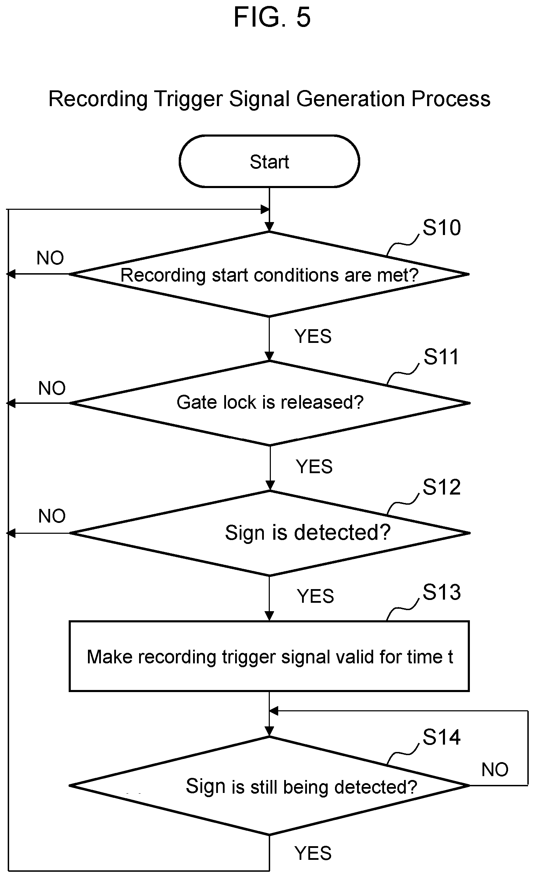

Meanwhile, FIG. 5 shows the flow of a series of processes executed by the vehicle body controller 39 in parallel with the recording process described in FIG. 4 regarding the recording of the video data and vehicle body data. The vehicle body controller 39 generates a recording trigger signal according to the processing procedure shown in FIG. 5 and sends the generated recording trigger signal to the video recording device 40.

In fact, when the power of the vehicle body controller 39 is turned on, it starts the processing shown in FIG. 5 (hereinafter referred to as recording trigger signal generation processing). First, it determines whether predetermined conditions (hereinafter referred to as recording start conditions) that can start the recording trigger signal generation processing, such as the posture of the front device 4 and the rotation speed of the engine 5, are met (S10).

As the recording start conditions, for example, conditions such as whether the posture of the front device 4 and the rotation speed of the engine 5 are within a predetermined range, or whether the current position of the construction machinery 1 is a predetermined location can be set. Then, if the vehicle body controller 39 obtains a negative result in this determination, it waits for such recording start conditions to be met.

Then, when the recording start conditions are eventually met, the vehicle body controller 39 first determines whether the lock of the gate lock device 45 (FIG. 2) is released (S11). Then, if the vehicle body controller 39 obtains a negative result in this determination, it returns to step S10 and executes the processing from step S10 onward in the same manner as described above.

On the other hand, if the vehicle body controller 39 obtains a positive result in the determination of step S11, it determines whether a sign of the construction machinery 1 tipping over or the front device 4 contacting surrounding objects is detected based on the sensor data provided by the inclination sensor 32, swing angle sensor 33, boom angle sensor 34, arm angle sensor 35, and load sensor 36 (S12).

Then, if the vehicle body controller 39 obtains a negative result in this determination, it returns to step S10 and repeats the processing from step S10 onward in the same manner as described above. On the other hand, if the vehicle body controller 39 obtains a positive result in the determination of step S12, it makes the recording trigger signal valid for time t (S13).

Subsequently, the vehicle body controller 39 determines whether a sign of the construction machinery 1 tipping over or the front device 4 contacting surrounding objects is still being detected (S14). If the vehicle body controller 39 obtains a positive result in this determination, it waits for such sign to no longer be detected.

Then, when such sign is eventually no longer detected, the vehicle body controller 39 obtains a positive result in the determination of step S14 and returns to step S10, and then repeats the processing from step S10 onward in the same manner as described above.

Here, the aforementioned "sign that the posture of the construction machinery 1 changes and leads to tipping, or the sign that the front device 4 contacts surrounding objects" is explained. The vehicle body controller 39 can set multiple such "signs."

For example, the vehicle body controller 39 can set the first "sign" as "the posture (tilt) of the upper swing body 3 has at least one of the tilt angles in the front-rear direction and the left-right direction exceeding a predetermined threshold angle for these front-rear and left-right tilts."

In this case, the vehicle body controller 39 mounted on the construction machinery 1 of this embodiment originally has a function to issue a warning to the operator in the seat 3A by sound or images displayed on the monitor 38 when the inclination of the vehicle body exceeds a certain threshold angle, indicating a risk of the construction machinery 1 tipping over. Therefore, in this embodiment, when issuing such a warning to the operator, the vehicle body controller 39 also makes the recording trigger signal valid.

By detecting this "sign," the file of sign detection data recorded by the video recording device 40 includes not only the sensor data output from the inclination sensor 32 at that time but also the sensor data from various hydraulic sensors mentioned above, which serve as a basis for estimating the operator's actions on the construction machinery 1. This allows for later verification of what kind of operation by the operator caused the vehicle body of the construction machinery 1 to tilt, based on this sign detection data.

The detection of the second "sign" can be set as "the size of the suspended load detected by the load sensor 36 of the front device 4 exceeds a predetermined threshold (hereinafter referred to as load threshold)."

In this case, the vehicle body controller 39 mounted on the construction machinery 1 of this embodiment originally has a function to issue a warning to the operator in the seat 3A by sound or images displayed on the monitor 38 when the suspended load lifted by the front device 4 exceeds the load threshold and the tipping moment of the vehicle body becomes excessive due to the posture of the front device 4, indicating a risk of the construction machinery 1 tipping over.

Therefore, in this embodiment, when issuing such a warning to the operator, the vehicle body controller 39 also makes the recording trigger signal valid. By detecting this "sign," the file of sign detection data recorded by the video recording device 40 includes not only the size of the load due to the suspended load detected by the load sensor 36 at that time but also the sensor data from various hydraulic sensors (here, hydraulic sensors attached to each cylinder such as the boom cylinder 16) that serve as a basis for estimating the operator's actions on the front device 4. Based on this sign detection data, it is possible to verify later what kind of operation by the operator caused a load exceeding the threshold to be applied to the front device 4 of the construction machinery 1.

Furthermore, the detection of the third "sign" can be set as "a part of the front device 4 has exceeded a predetermined operation restriction area."

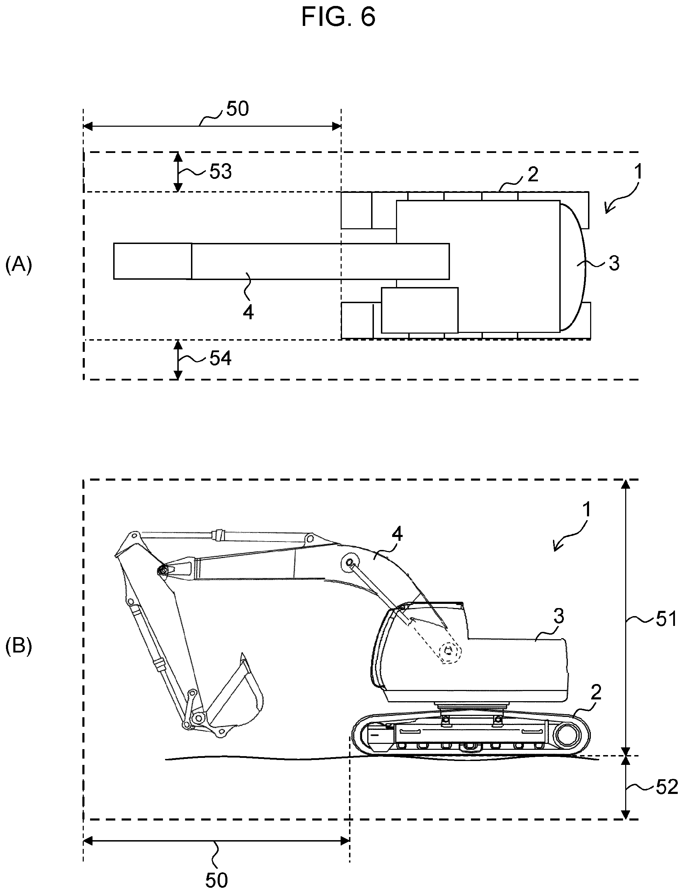

In the construction machinery 1 of this embodiment, the operator can set the operation restriction area of the front device 4 on the vehicle body controller 39 to prevent the vehicle body from contacting surrounding objects. Specifically, as shown in FIG 6, the operator can set the forward restriction area 50 in the forward direction, the height restriction area 51 in the height direction, the depth restriction area 52 in the depth direction, the right restriction area 53 to the right, and the left restriction area 54 to the left, each based on the lower travel body 2.

In this case, the vehicle body controller 39 constantly calculates the posture of the front device 4 based on the sensor data provided by the swing angle sensor 33, boom angle sensor 34, and arm angle sensor 35. Then, if the vehicle body controller 39 determines that a part of the front device 4 has exceeded any of the forward restriction area 50, height restriction area 51, depth restriction area 52, right restriction area 53, or left restriction area 54, it has the function to issue a warning to the operator in the driver's seat 3A through sound or images displayed on the monitor 38, and to stop the operation of the front device 4.

Therefore, in this embodiment, when issuing a warning to the operator, the vehicle body controller 39 simultaneously activates the recording trigger signal. The file of the sign detection data recorded by the video recording device 40, due to the detection of this "sign," includes information calculated by the vehicle body controller 39 on which direction the front device 4 exceeded the operation restriction area, as well as sensor data corresponding to the operation of swinging the upper swing body 3 and various operations by the operator on the front device 4. Based on this sign detection data, it is possible to later verify what kind of operation by the operator caused a part of the front device 4 to exceed the operation restriction area.

### (4) Configuration of various screens displayed on the external server device

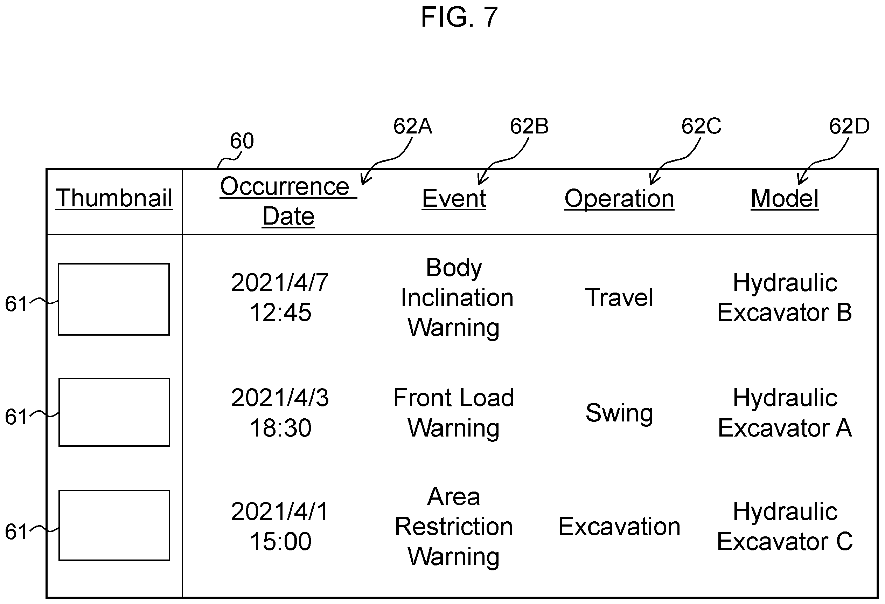

FIG 7 shows the screen configuration of the sign detection case list screen 60, which can be displayed on the external server device 47 through a predetermined operation, based on the sign detection data uploaded from the construction machinery 1 to the external server device 47 (FIG 2) as described above.

The sign detection case list screen 60 displays a list of information on each case where a sign of tipping due to changes in the posture of construction machinery 1, or a sign of the front device 4 contacting surrounding objects, was detected, based on the sign detection data uploaded from each construction machinery 1 to the external server device 47.

Specifically, for these cases, the occurrence date and time ("Occurrence Date"), the type of warning issued to the operator when the sign detection data was saved ("Event"), the content of the operation performed by the operator at that time recognized based on sensor data from each hydraulic sensor ("Operation"), and the model of the construction machinery 1 where the incident occurred ("Model"), along with the thumbnail image 61 of the first frame of the composite video based on the sign detection data, are displayed on the sign detection case list screen 60.

For example, FIG 7 shows a case where a "Body Inclination Warning" was issued on "2021/4/7 12:45" during the "Travel" operation of construction machinery 1 of the model "Hydraulic Excavator B," indicating that the posture of the body of construction machinery 1 inclined beyond the permissible angle. Also, FIG 7 shows a case where a "Front Load Warning" was issued on "2021/4/3 18:30" during the "Swing" operation of construction machinery 1 of the model "Hydraulic Excavator A," indicating that the load of the suspended load of the front device 4 exceeded the aforementioned load threshold. Furthermore, Figure 7 shows a case where an "Area Restriction Warning" was issued on "2021/4/1 15:00" during the "Excavation" operation of construction machinery 1 of the model "Hydraulic Excavator C," indicating that a part of the front device 4 of the construction machinery 1 exceeded the restriction area (for example, the depth restriction area 52 in Figure 6).

Also, on the sign detection case list screen 60, by clicking on the strings "Occurrence Date," "Event," "Operation," and "Model" displayed at the top, a pull-down menu (not shown) is displayed, from which the desired date or item can be specified. This allows the range of cases displayed on the sign detection case list screen 60 to be limited to cases corresponding to that date or item.

For example, if the string "Occurrence Date" 62A is clicked, a pull-down menu with a calendar is displayed. Then, by using the calendar displayed in this pull-down menu to specify a date or date range, the cases displayed on the sign detection case list screen 60 are limited to sign cases within the specified date or date range.

Also, if the string "Event" 62B is clicked, a pull-down menu listing all types of warnings issued by construction machinery 1 is displayed. Then, by specifying the desired warning from the warnings listed in this pull-down menu, the cases displayed on the sign detection case list screen 60 are limited to cases of the specified warning.

Furthermore, if the string "Operation" 62C is clicked, a pull-down menu listing all types of operations performed by the operator on construction machinery 1 is displayed. Then, by specifying the desired operation from the operations listed in this pull-down menu, the cases displayed on the sign detection case list screen 60 are limited to cases of the specified operation.

Furthermore, if the string "Model" 62D is clicked, a pull-down menu listing all models of construction machinery 1 managed by the external server device 47 is displayed. Then, by specifying the desired model from the models listed in this pull-down menu, the cases displayed on the sign detection case list screen 60 are limited to cases of the specified model of construction machinery 1.

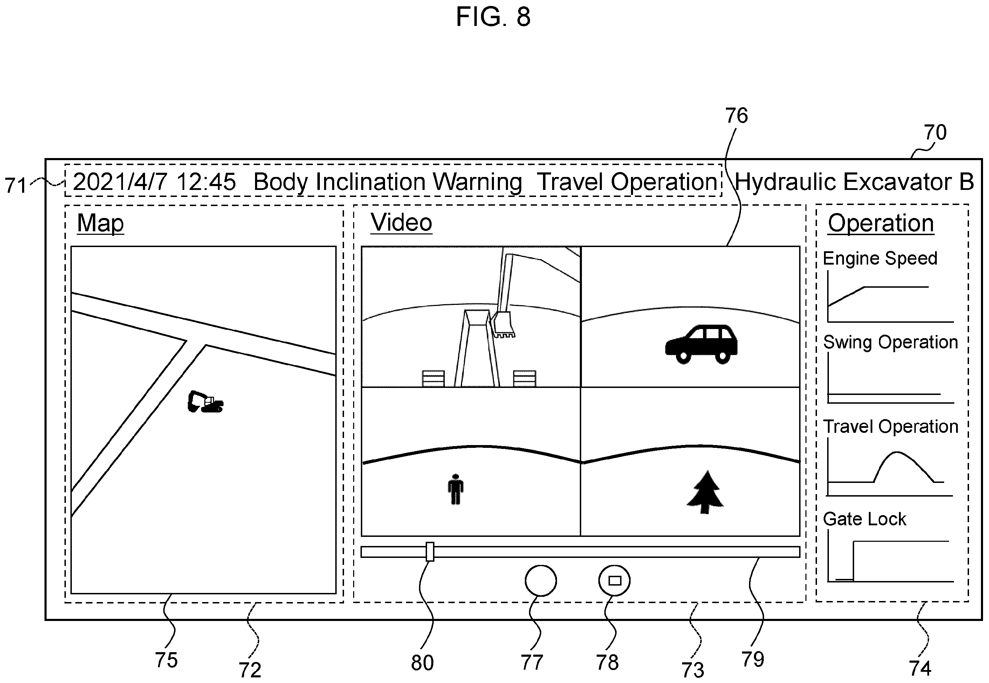

Meanwhile, the sign detection case list screen 60 can be replaced with, or overlaid on, the sign detection case list screen 60 that was displayed until then, by selecting a row corresponding to the desired case or double-clicking the thumbnail image 61, to display a screen like the one shown in FIG 8 based on the sign detection data of that case (hereinafter referred to as the case detail screen 70).

This case detail screen 70 is configured with a case summary display area 71, a map display area 72, a video display area 73, and an operation information display area 74. Then, the case summary display area 71 displays a summary of the corresponding case, and the map display area 72 displays a bird's-eye map 75 of the location where the corresponding case occurred, based on the position data included in the sign detection data of the corresponding case.

The video display area 73 displays the composite video 76 saved when the corresponding case occurred. Note that Figure 8 shows an example where the composite video 76 is a split video. The composite video 76 displayed in the video display area 73 can be started or stopped by pressing (clicking) the play button 77 or stop button 78 displayed below the composite video 76. Also, the composite video 76 can have its playback position moved to a position corresponding to the position of the slider 80 by dragging the slider 80 of the slider bar 79 displayed below the composite video 76 to the left or right.

Furthermore, the operation information display area 74 displays the content of various operations by the operator before and after the occurrence date and time of the corresponding case in graph format. In FIG 8, the engine speed ("Engine Speed") before and after the occurrence date and time of the corresponding case is displayed in graph format as is. Also in FIG 8, the hydraulic pressure of the hydraulic oil supplied to the swing hydraulic motor 9 (FIG 1) ("Swing Operation") is displayed in graph format as the content of the swing operation, and furthermore, the hydraulic pressure of the hydraulic oil supplied to the travel hydraulic motor 7 (FIG 1) ("Travel Operation") is displayed in graph format as the content of the travel operation. Furthermore, in Figure 8, the state of the gate lock device 45 (FIG 2) ("Gate Lock") is displayed in the same format as in FIG 3(A).

### (5) Effects of this embodiment

As described above, the operation information recording system 30 of this embodiment saves composite video data and vehicle body data for a predetermined time before and after the detection of a sign of tipping of construction machinery 1 or contact of the front device 4 with surrounding objects as a near miss accident. Therefore, even in environments where large impacts occur during the operation of construction machinery 1, only the video data and vehicle body data at the time of the near miss accident can be recorded.

Also, in this operation information recording system 30, since only the video data and vehicle body data at the time of the near miss accident can be recorded, unnecessary data is not saved in the video recording device 40, and the storage capacity of the video recording device is not overwhelmed by unnecessary data, effectively preventing necessary data from being overwritten.

Therefore, according to this operation information recording system 30, the extraction of surrounding video at the time of events such as near miss accidents is facilitated, simplifying the verification work for such near miss accidents.

### (6) Other embodiments

In the above-described embodiment, the case where the construction machinery is a hydraulic excavator was described, but the present invention is not limited to this and can be widely applied to various other construction machinery such as cranes and loaders.

Also, in the above-described embodiment, the case where the sign detection case list screen 60 and the case detail screen 70 are configured as shown in FIG 7 and FIG 8 was described, but the present invention is not limited to this and can be widely applied to various other configurations.

Furthermore, in the above-described embodiment, the case where the sign detection case list screen 60 and the case detail screen 70 can be displayed only on the external server device 47 was described, but the present invention is not limited to this. For example, the sign detection case list screen 60 and the case detail screen 70 may also be displayed on a client terminal connected to the external server device 47 via a network such as the Internet.

### Industrial Applicability

The present invention can be widely applied to various construction machinery.

### Description of Reference Characters

1......construction machinery, 2......lower travel body, 3......upper swing body, 4......front device, 30......operation information recording system, 31......surrounding monitoring camera, 32......inclination sensor, 33......swing angle sensor, 34......boom angle sensor, 35......arm angle sensor, 36......load sensor, 37......monitor controller, 38......monitor, 39......vehicle body controller, 40......video recording device, 41......communication terminal, 45......gate lock device, 47......external server device, 50......forward restriction area, 51......height restriction area, 52......depth restriction area, 53......right restriction area, 54......left restriction area, 60......sign detection case list screen, 70......case detail screen

## Claims

1. A video recording system for recording the surroundings of construction machinery comprising:
a camera that captures the surroundings of the construction machinery;
an one or more types of sensors that detects the state of the construction machinery;
a controller that detects a sign of the construction machinery tipping over or a part of the construction machinery coming into contact with surrounding objects, based on the output of the sensor or the surrounding images of the construction machinery captured by the camera;
a video recording device that records the surrounding images of the construction machinery captured by the camera, triggered by the controller detecting the sign.

2. The video recording system according to claim 1, wherein
the sensor includes an inclination sensor for detecting the tilt of the body of the construction machinery,
the sign of the construction machinery tipping over is when the tilt of the body detected by the inclination sensor exceeds a preset first threshold.

3. The video recording system according to claim 1, wherein
the construction machinery is a hydraulic excavator with a front device for performing work, the sensor includes a load sensor for detecting the load of the suspended load on the front device;
the sign of the construction machinery tipping over is when the load of the suspended load on the front device detected by the load sensor exceeds a preset second threshold.

4. The video recording system according to claim 1, wherein
the construction machinery is a hydraulic excavator with a front device for performing work, the sensor includes a posture sensor for detecting the posture of the front device;
the sign of a part of the construction machinery coming into contact with surrounding objects is when a part of the front device exceeds a preset operation limit area around the construction machinery.

5. The video recording system according to claim 1, further comprising an external server device provided separately from the construction machinery, wherein
the video recording device uploads the video data of the recorded surrounding images of the construction machinery to the external server device;
the external server device displays the surrounding images of the construction machinery based on the uploaded video data.

6. The video recording system according to claim 1, wherein
the external server device updates the video data from a plurality of construction machinery;
the external server device displays the surrounding images based on the video data that meets specified conditions from the uploaded video data.
